(19) Europäisches Patentamt / European Patent Office / Office européen des brevets

(11) **EP 3 567 322 A1**

(12) **EUROPEAN PATENT APPLICATION**

(43) Date of publication:
**13.11.2019 Bulletin 2019/46**

(21) Application number: **18171214.2**

(22) Date of filing: **08.05.2018**

(51) Int Cl.:
*F24F 3/16* (2006.01)      *F24F 11/00* (2018.01)
*F24F 11/63* (2018.01)      *F24F 11/72* (2018.01)
*F24F 12/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AE Eindhoven (NL)**

(72) Inventors:
• ZHANG, Zhiqiang Zq
  5656 AE Eindhoven (NL)
• SU, Jing
  5656 AE Eindhoven (NL)
• KELLY, Declan Patrick
  5656 AE Eindhoven (NL)

(74) Representative: **de Haan, Poul Erik et al**
**Philips International B.V.**
**Philips Intellectual Property & Standards**
**High Tech Campus 5**
**5656 AE Eindhoven (NL)**

(54) **SMART AIR PURIFICATION**

(57)     An air purification monitoring system (10) for monitoring an air purification apparatus (50) adapted to purify air in an enclosed space (1) is disclosed. The air purification apparatus (50) at least comprises a first inlet (55) for receiving indoor air from the enclosed space (1), a second inlet (57) for receiving outdoor air from an outdoor space and at least one outlet (53) coupled to the first and second inlets (55, 57); a filter arrangement (61, 63) positioned in between the first and second inlets (55, 57) and the at least one outlet (53); and an airflow displacement arrangement (65, 67, 69) arranged to generate at least a first airflow (81) from the first inlet (55) to the at least one outlet (53) and a second airflow (82) from the second inlet (57) to the at least one outlet (53). The air purification monitoring system (10) at least comprises a processor (31) arranged to generate a control signal for the airflow displacement arrangement (65, 67, 69) as a function of a first unfavourable matter concentration within the enclosed space (1) and a second unfavourable matter concentration in the outdoor air, said control signal causing the airflow displacement arrangement (65, 67, 69) to generate at least the first airflow (81) at a first airflow rate and the second airflow (82) at a second airflow rate. Also disclosed are an air purification apparatus, an air purification apparatus control method and a computer program product.

**FIG. 1**

**Description**

FIELD OF THE INVENTION

The present invention relates to an air purification monitoring system for monitoring an air purification apparatus adapted to purify air in an enclosed space.

The present invention further relates to an air purification apparatus adapted to be controlled by such an air purification monitoring system.

The present invention further relates to a method of controlling such an air purification apparatus.

The present invention further relates to a computer program product for implementing such a method on an air purification monitoring system.

BACKGROUND OF THE INVENTION

Air purifiers are commonplace in today's society to clean air in confined spaces, e.g. rooms, for example to reduce the exposure of people in such confined spaces to harmful or unpleasant pollutants, e.g. allergens, particles, odours, and so on. To this end, the air purifiers typically comprise one or more pollutant removal structures, such as one or more filters, catalytic converters, electrostatic precipitators, and so on. The one or more filters may include air filters such as carbon filters, HEPA filters, odour filters, anti-bacterial filters or the like. Catalytic converters may be used to break down gaseous pollutants into smaller molecules, e.g. $H_2O$ and $CO_2$. Electrostatic precipitators may be employed for the removal of charged particles via collector plates. Other pollutant removal technologies employed in such purifiers are also known.

A particular class of air purifiers includes fresh air purification units (FAPUs), in which fresh air, i.e. outdoor air, is introduced into the confined space after being passed through one or more of the pollutant removal structures in order to at least partially remove potentially harmful constituents from the fresh air, e.g. pollutants such as particulate matter, $NO_x$, ozone and so on, which can cause health problems such as respiratory conditions, e.g. asthma, if sufferers from such conditions are exposed to such matter. However, the filtration capacity of such FAPUs is limited, which means that when the outdoor air is heavily polluted residual pollution will enter the confined space, which is highly undesirable. In addition, such heavy pollution can quickly saturate the pollutant removal structures in such a FAPU, such that these pollutant removal structures have to be regularly replaced.

This problem may be addressed by using a stand-alone air purifier within the confined space, which typically has high efficiency in particulate matter removal such that particulate matter entering the confined space from outside through natural ventilation can be effectively removed. In order to let such stand-alone air purifiers work as efficiently as possible, it is recommended that such devices are operated in a hermetically sealed space, but this has the drawback that a build-up can occur of potentially harmful matter generated within the confined space. Such matter will also be referred to as unfavourable matter, that is, airborne constituents that, at least at certain concentrations, can be harmful to a person inhaling such matter. For example, indoor $CO_2$ concentrations should be kept below certain thresholds, as elevated $CO_2$ levels can cause drowsiness and headaches to persons exposed to such elevated levels. Other examples of such unfavourable matter include volatile organic compounds (VOCs) such as formaldehyde and toluene, which may be present in elevated levels after decoration of the confined space and which can compromise the health of persons exposed to such compounds.

Some FAPUs have the ability to be operated in several modes including a fresh air ventilation mode in which outdoor air is being introduced into the confined space and a recirculation mode in which indoor air, i.e. air from within the confined space, is recirculated in order to purify the air. Hybrid modes in which such fresh air ventilation and recirculation are combined may also be supported. An example of such a FAPU is disclosed in Chinese patent application CN 106,440,029, which discloses a fresh air purifying system comprising an air in the device, an air outlet device, an air channel, and air filtering device, a fresh air device and an intelligent control module. The air inlet device is provided with an air inlet and an actual flow fan. The air outlet device is provided with an air outlet and a centrifugal fan. The air inlet device and the air outlet device are connected through the air channel in which the air filtering device is arranged. The fresh and device opposes the air inlet and comprises a multi-purpose and are opening communicating with the outside and an air regulating plate rotationally arranged in a multi-purpose air opening. The intelligent control module is configured to enable the fresh air purifying system to operate in different modes according to received outdoor air quality information.

Although such an intelligent or smart FAPU is better equipped to prevent highly polluted outdoor air from entering a confined space, it may not guarantee that the air quality within the confined space is maintained.

## SUMMARY OF THE INVENTION

The present invention seeks to provide an air purification monitoring system for monitoring an air purification apparatus adapted to purify air in an enclosed space that can control such an air purification apparatus in a manner such that the air quality within the confined space is better maintained.

The present invention further seeks to provide an air purification apparatus that can be controlled by such an air purification monitoring system.

The present invention further seeks to provide a computer-implemented method of controlling such an air purification apparatus.

The present invention further seeks to provide a computer program product that can be used to configure an air purification monitoring system to implement this computer-implemented method.

According to an aspect, there is provided an air purification monitoring system for monitoring an air purification apparatus adapted to purify air in an enclosed space, the air purification apparatus comprising a first inlet for receiving indoor air from the enclosed space, a second inlet for receiving outdoor air from an outdoor space and at least one outlet coupled to the first and second inlets; a filter arrangement positioned in between the first and second inlets and the at least one outlet; and an airflow displacement arrangement arranged to generate at least a first airflow from the first inlet to the at least one outlet and a second airflow from the second inlet to the at least one outlet; the air purification monitoring system comprising a processor arranged to generate a control signal for the airflow displacement arrangement as a function of a first unfavourable matter concentration within the enclosed space and a second unfavourable matter concentration in the outdoor air, said control signal causing the airflow displacement arrangement to generate at least the first airflow at a first airflow rate and the second airflow at a second airflow rate. The present invention is based on the insight that by monitoring the concentration of indoor and outdoor unfavourable matter concentrations, which may be concentrations of different types of unfavourable matter, the operation of the air purification apparatus may be controlled in a particularly intelligent manner by limiting the amount of indoor and/or outdoor unfavourable matter present within the confined or enclosed space.

To this end, the air purification monitoring system may be adapted to receive the first unfavourable matter concentration from a first unfavourable matter sensor, which may be separate to the air purification monitoring system in a first set of embodiments or may be part of the air purification monitoring system in a second set of embodiments. The air purification monitoring system may further be adapted to receive the second unfavourable matter concentration from a second unfavourable matter sensor, which may be separate to the air purification monitoring system in a first further set of embodiments or may be part of the air purification monitoring system in a second further set of embodiments. In yet another set of embodiments, the processor is arranged to retrieve the second unfavourable matter concentration from a remote service such as an Internet-accessible service providing such information, e.g. in real time or as a forecast such as a weather forecast.

Preferably, the processor is further configured to generate the control signal in order to cause the airflow displacement arrangement to generate at least the first airflow rate and the second airflow rate based on a volume of the enclosed space and/or as a function of a rate of spontaneous ventilation between the enclosed space and the outdoor space. In this manner, the air purification of the enclosed space can be controlled in a particularly effective manner. For example, if the volume of the enclosed space is known, the processor can calculate how much air should be replaced per unit time in order to achieve effective ventilation of the enclosed space. What is more, if the rate of spontaneous ventilation, i.e. naturally occurring ventilation, between the enclosed space and the outdoor space can be quantified, the required airflow to be generated by the air purification apparatus in order to achieve the desired ventilation rate of the enclosed space can be accurately calculated, thereby improving the energy efficiency of the air purification apparatus as well as the air quality within the enclosed space.

The spontaneous ventilation between the enclosed space and the outdoor space may be estimated from a change in the first unfavourable matter concentration in the enclosed space over time. Any suitable type of unfavourable matter may be monitored in this manner. For example, the first unfavourable matter maybe one or more of $CO_2$, $O_3$, PM 10, PM 2.5, CO, $NO_2$, $SO_2$ or formaldehyde or other VOCs.

The air purification apparatus may further comprise third inlet for receiving the indoor air from the enclosed space and a third outlet for discharging the indoor air to the outdoor space and the airflow displacement arrangement maybe further arranged to generate a third airflow from the third inlet to the third outlet, in which case the control signal further causes the airflow displacement arrangement to generate the third airflow at a third airflow rate. In this embodiment, the rate at which air is expelled from the enclosed space to the outdoor is also controlled by the control signal, thereby providing further control over the air quality within the enclosed space. This for example is particularly beneficial where the outdoor air quality is considered to be better than the indoor air quality, such that the indoor air can be more rapidly expelled into the outdoor space.

The processor may be further configured to generate the control signal in order to cause the airflow displacement arrangement to individually set the first airflow rate and the second airflow rate to one of a low airflow rate, a medium airflow rate and a high airflow rate, and wherein the control signal is configured to set the first airflow rate to one of the medium airflow rate and the high airflow rate and the second airflow rate to one of the low airflow rate and the medium airflow rate, with the first airflow rate being higher than the second airflow rate if the spontaneous ventilation is below a defined threshold; set the first airflow rate to the low airflow rate and the second airflow rate to one of the medium airflow rate and the high airflow rate if the spontaneous ventilation is above the defined threshold and the second unfavourable matter concentration is below a further defined threshold; and set the first airflow rate to one of the medium airflow rate and the high airflow rate and the second airflow rate to the low airflow rate if the spontaneous ventilation is above the defined threshold and the second unfavourable matter concentration is above the further defined threshold. Which of the rate combinations is being selected may be a function of the rate of spontaneous ventilation between the enclosed space and outdoor space, such that an effective airflow from a high concentration unfavourable matter space towards a low concentration unfavourable matter space can be achieved with the air purification apparatus. To this end, the processor maybe configured to generate the control signal at least defining the first airflow rate and the second airflow rate based on a comparative result between the first unfavourable matter concentration and the second unfavourable matter concentration or the comparative result between the first unfavourable matter concentration and another defined threshold in order to further determine the specific levels of the first and second airflow rates respectively.

According to another aspect, there is provided an air purification apparatus adapted to purify air in an enclosed space, comprising a first inlet for receiving indoor air from the enclosed space, a second inlet for receiving outdoor air from an outdoor space and at least one outlet coupled to the first and second inlets; a filter arrangement positioned in between the first and second inlets and the at least one outlet; and an airflow displacement arrangement arranged to generate a first airflow from the first inlet to the at least one outlet and a second airflow from the second inlet to the at least one outlet, wherein the airflow displacement arrangement is responsive to the control signal generated with the air purification monitoring system according to any of the herein described embodiments. In some embodiments, the air purification apparatus further comprises this air purification monitoring system. Such an air purification apparatus benefits from being able to intelligently controlling the air quality within the enclosed space based on several parameters including indoor and outdoor unfavourable matter concentrations, and optionally enclosed space volume and/or spontaneous ventilation rate between the enclosed space and the outdoor space as explained in more detail above.

In an embodiment, the airflow displacement arrangement comprises a first airflow displacement apparatus and a second airflow displacement apparatus, wherein the first airflow displacement apparatus is arranged to generate the first airflow, and at least the second airflow displacement apparatus is arranged to generate the second airflow. In this manner, the respective airflows can be individually controlled, thereby further improving the control over the air quality within the enclosed space. In a further embodiment, both the first airflow displacement apparatus and the second airflow displacement apparatus may be arranged to generate the second airflow, for example where the second airflow forms part of an airflow in which outdoor air is introduced into the air purification apparatus and mixed with indoor air.

The air purification apparatus may further comprise at least one adjustable valve for regulating the first airflow rate and the second airflow rate. Such an adjustable valve may be arranged to switch between the first airflow and the second airflow or may be arranged to control a mixing ratio of the first airflow and the second airflow as well as the rate at which these airflows are been generated.
The air purification apparatus may further comprise at least one heat exchange unit for adjusting the temperature of the second airflow prior to the second airflow exiting the air purification apparatus in order to ensure appropriate climate control within the enclosed space, for example to prevent overly hot or cold outdoor air from entering the enclosed space.

In a further embodiment, the airflow displacement arrangement further comprises a third airflow displacement apparatus and wherein the second airflow displacement apparatus and the third airflow displacement apparatus are arranged to generate the third airflow, in which case the at least one adjustable valve maybe further arranged to regulate the third airflow rate.

In accordance with yet another aspect, there is provided a computer implemented method for generating a control signal for controlling the air purification apparatus according to any of the herein described embodiments, the method comprising determining a first unfavourable matter concentration within the enclosed space; determining a second unfavourable matter concentration in the outdoor air; determining a first airflow rate from the first inlet to the at least one outlet and a second airflow rate from the second inlet to the at least one outlet based on the determined first unfavourable matter concentration and the determined second unfavourable matter concentration; generating the control signal indicative of at least the determined first and second airflow rates; and communicating the control signal to the airflow displacement arrangement of the air purification apparatus. Such a method may be deployed in order to intelligently control an air purification apparatus with the thus generated control signal, such that a high air quality can be maintained within the enclosed space by the air purification apparatus operated by such a control signal.

In an embodiment, the computer-implemented method further comprises determining at least one of a volume of the enclosed space and a spontaneous ventilation rate between the enclosed space and the outdoor air; and determining a first airflow rate from the first inlet to the at least one outlet and a second airflow rate from the second inlet to the at least one outlet based on the determined first unfavourable matter concentration, the determined second unfavourable matter concentration and the determined volume of the enclosed space and/or the determined spontaneous ventilation rate between the enclosed space and the outdoor air. As explained above, this allows for even more accurate control of the air quality within the enclosed space as the operation of the air purification apparatus can be tailored to the size (volume) of the enclosed space and/or its spontaneous ventilation with the outdoor space.

According to yet another aspect, there is provided a computer program product comprising a computer readable storage medium having computer readable program instructions embodied therewith for, when executed on the processor of the air purification monitoring system of any of the herein described embodiments, causes the processor to implement the method of any of the herein described embodiments for controlling the air purification apparatus of any of the herein described embodiments. Such a computer program product may be installed, e.g. as an app or the like, on the air purification monitoring system. This for example allows for the conversion of existing smart devices such as smart phones and tablet computers or any other type of computer for that matter into the air purification monitoring system according to embodiments of the present invention.

BRIEF DESCRIPTION OF THE DRAWINGS

Embodiments of the invention are described in more detail and by way of non-limiting examples with reference to the accompanying drawings, wherein:

FIG. 1 schematically depicts an air purification arrangement including an air purification monitoring system according to an embodiment;
FIG. 2 schematically depicts an air purification arrangement including an air purification monitoring system according to another embodiment;
FIG. 3 schematically depicts an air purification apparatus according to an example embodiment;
FIG. 4 schematically depicts an air purification apparatus according to another example embodiment;
FIG. 5 schematically depicts an air purification apparatus according to yet another example embodiment;
FIG. 6 is a flowchart of a method of controlling an air purification apparatus located in an air-filled space according to an embodiment;
FIG. 7 is a flowchart of the operating modes of an air purification apparatus operated in accordance with such a control method;
FIG. 8 shows a set of graphs associated with a first ventilation condition of a room in which an air purification apparatus according to an embodiment of the present invention is placed; and
FIG. 9 shows a set of graphs associated with a second ventilation condition of a room in which an air purification apparatus according to an embodiment of the present invention is placed.

DETAILED DESCRIPTION OF THE EMBODIMENTS

It should be understood that the Figures are merely schematic and are not drawn to scale. It should also be understood that the same reference numerals are used throughout the Figures to indicate the same or similar parts.

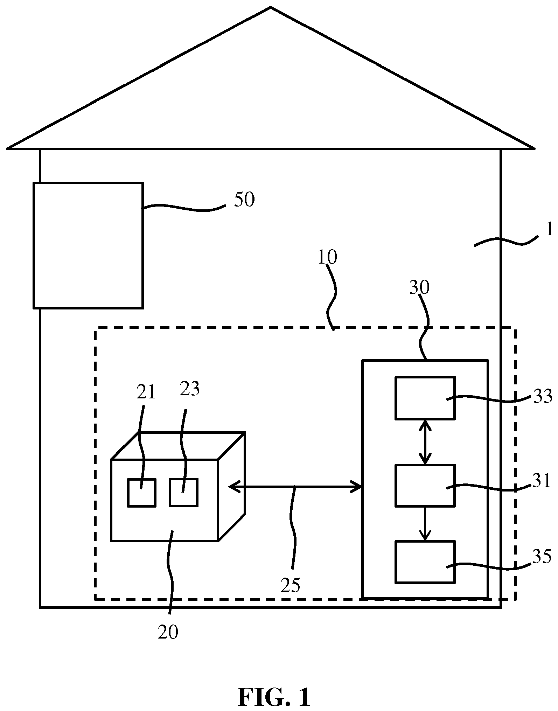

FIG. 1 schematically depicts an air purification monitoring system 10 according to an embodiment. The air purification monitoring system 10 is adapted to control the operation of an air purification apparatus 50 fitted into the enclosed space 1 such as a room of a house, office building or the like. As will be explained in further detail below, the air purification apparatus 50 is operable in a first mode in which outdoor air is ventilated into the enclosed space 1 and in a second mode in which the indoor air within the enclosed space 1 is circulated through the air purification apparatus 50. Such airflows are typically passed through one or more pollutant removal structures fitted within the air purification apparatus 50 in order to purify this air before it is expelled into the enclosed space 1. Such an air purification apparatus 50 maybe fitted within the enclosed space 1 in any suitable manner, such as through an external wall, roof or window of a building or dwelling enclosing the space 1 such that the air purification apparatus 50 has access to the outdoor space from which the outdoor air is sourced. Such an air purification apparatus 50 may contain any suitable type of pollutant removal structures, e.g. filters such as HEPA filters, carbon filters, and so on in order to remove pollutants such as particulate matter, pollen, odours, bacteria, volatile organic compounds (VOCs) such as formaldehyde and toluene, and so on.

The air purification monitoring system 10 typically comprises a computing device 30 including a processor 31. The computing device 30 may be any suitable computing device, such as a personal computer, e.g. a desktop computer or a laptop computer, a tablet computer, a personal digital assistant, a mobile communication device such as a smartphone and so on. The computing device 30 may form an assembly with the air purifier 50. In such an assembly, the computing device 30 maybe a discrete entity or may form part of the air purifier 50, i.e. the air purifier 50 may comprise the processor 31. The processor 31 may be any suitable processor, e.g. a generic processor or an application-specific processor. The computing device 30 may further comprise a data storage device 33 communicatively coupled to the processor 31.

The computing device 30 is arranged to communicate with one or more sensors 21, 23 for sensing levels of an unfavourable matter of interest in the atmosphere within the enclosed space 1 in which the air purification apparatus 50 is placed. Typically, the first unfavourable matter sensor 21 is arranged to sense a concentration or level of an unfavourable matter for which the air purification apparatus 50 comprises a pollutant removal structure such as an air filter or the like arranged to remove this unfavourable matter. For example, the sensor 21 may be a particulate matter sensor such as a PM 2.5 sensor for detecting particulate matter of a certain diameter in the atmosphere, e.g. PM2.5 or PM10, dust particles, allergens, or the like, a formaldehyde sensor, a toluene sensor, and so on. Alternatively, the first unfavourable matter sensor 21 is a carbon dioxide sensor ($CO_2$) to monitor $CO_2$ levels within the enclosed space 1. In this scenario, as will be understood by the skilled person, the air purification apparatus 50 may not comprise a pollutant removal structure capable of removing $CO_2$. In yet another example embodiment, the first unfavourable matter sensor 21 is a sensor for detecting the concentration of a particular unfavourable matter for which the air purification apparatus 50 comprises a pollutant removal structure, wherein a further sensor 23 such as a $CO_2$ sensor, may also be present. As will be understood from the foregoing, the presence of the further sensor 23 is optional and may be omitted from certain embodiments of the present invention.

The sensors 21, 23 may be integrated in any suitable device, such as the air purification apparatus 50, the computing device 30 or a stand-alone sensor device 20, e.g. a sensor box or the like. Stand-alone sensor devices, e.g. sensor boxes, are increasingly available for home-use and may include sensors for measuring air pollutants such as volatile organic compounds (VOCs) including formaldehyde and toluene, particulates including PM2.5 as well as environmental parameters such as relative humidity and temperature. The processor 31 may be adapted to monitor the concentration of a particular pollutant based on the sensor data provided by the sensor 21 of the sensor device 20. In an embodiment, the processor 31 may be integrated into such a stand-alone sensor device 20, i.e. the stand-alone sensor device 20 may comprise the computing device 30.

The sensors 21, 23 are communicatively coupled to the computing device 30 over a communication link 25 such that the processor 31 can receive sensor readings from such sensors. Such a communication link may be a wired communication link, e.g. in case the sensors 21, 23 are integral to the computing device 30, or may be a wireless communication link, e.g. in case the sensors 21, 23 are located in a different device to the computing device 30, e.g. in a stand-alone sensor device 20. To this end, the respective devices communicatively coupled over such a wireless communication link may include a wireless transceiver (not shown). The devices may communicate with each other through their respective wireless transceivers using any suitable wireless communication protocol, e.g. Bluetooth, Wi-Fi, a mobile communication protocol such as 2G, 3G, 4G or 5G, a suitable near-field communication (NFC) protocol or a proprietary protocol. In case of such wireless communication, the respective devices may communicate directly with each other or may communicate with each other through an intermediary such as a wireless bridge, a router, a hub, and so on. Any suitable embodiment of wired or wireless communication between such respective devices may be contemplated.

The processor 31 may be further communicatively coupled to a data storage device 33, here shown to form part of the computing device 30. Such a data storage device may be any suitable device for storing digital data, e.g. a random access memory, a cache memory, a Flash memory, a solid state storage device, a magnetic storage device such as hard disk, an optical storage device and so on. Alternatively, the data storage device 33 may be separate from the computing device 30, e.g. a network storage device or a cloud storage device accessible to the processor 31 over a network such as a LAN or the Internet. The processor 31 may store sensor data received from one or more of the connected sensors 21, 23 in the data storage device in order to collect and store historical data regarding the levels of the unfavourable matter interest in the atmosphere within the enclosed space 1 comprising the air purification apparatus 50 from which the processor 31 may derive certain parameters relating to the enclosed space 1 as will be explained in further detail below.

In FIG. 1, the computing device 30 further comprises a sensory output device 35 under control of the processor 31. Such a sensory output device may be any device that capable of producing an output that can be detected by one of the human senses. For example, the sensory output device 35 maybe adapted to produce a visible or audible output. For example, the sensory output device 35 may comprise a display and/or one or more LEDs adapted to provide such an output.

As will be readily understood by the skilled person, the processor 31 may be adapted to receive sensor data from a plurality of sensors 21 each associated with different unfavourable matter of interest, with the processor 31 adapted to (simultaneously) monitor the respective concentration levels of different unfavourable matter of interest from the sensor data received from the multiple sensors in the sensor device 20.

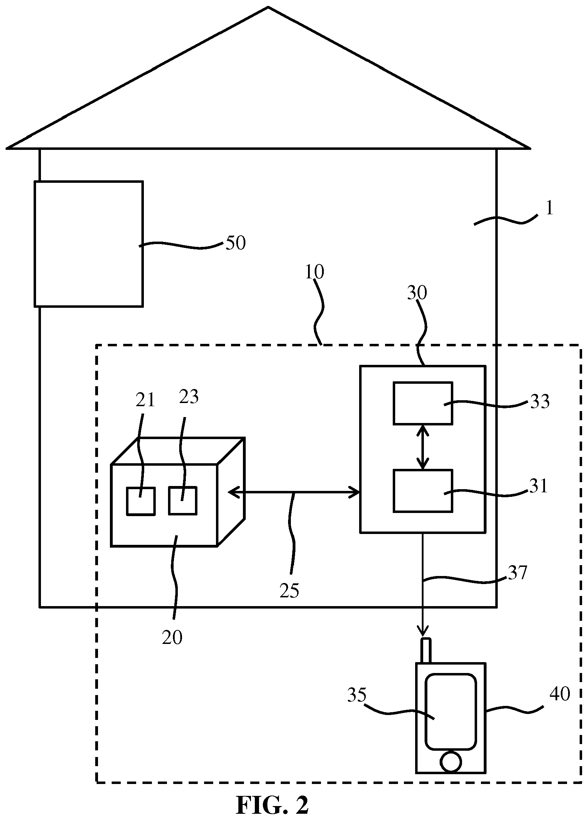

In the above embodiment, the sensory output device 35 forms part of the computing device 30, e.g. may be an integral part of the computing device 30 or may be attached to the computing device 30, e.g. a monitor or loudspeaker attached to the computing device 30. In an alternative arrangement schematically depicted in FIG. 2, the sensory output device 35 may form part of a mobile communication device 40, with the computing device 30 adapted to communicate with the mobile communication device over a wireless communication link, e.g. using any of the aforementioned wireless communication protocols. In this embodiment, may be able to control the operation of the air purification apparatus 50 even when not in direct vicinity of the computing device 30, e.g. when being in a different room or being outside the building comprising the air purification apparatus 50, which for example is advantageous in order to ensure that the enclosed space 1 is conditioned to a desired condition in anticipation of the arrival of the user of the mobile communication device 40 in the enclosed space 1. Any suitable mobile communication device 40, e.g. a smart phone, tablet computer, personal digital assistant, and so on, may be used for this purpose. As will be readily understood by the skilled person, the mobile communication device 40 may be configured with a software application program, e.g. an app, to interact with the computing device 30 as described above.

In yet another embodiment, the unfavourable matter sensor(s) 21 and 23, as well as the processor 31 and the sensory output device 35 are integrated in the air purification apparatus 50, thereby forming an integrated air purification apparatus 50 according to an embodiment of the present invention.

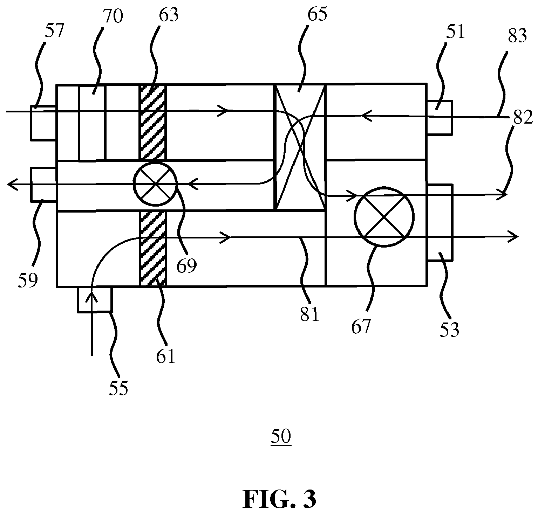

Next, some examples of an air purification apparatus 50 according to embodiments of the present invention will be described in further detail. A first example is schematically depicted in FIG. 3, which depicts an air purification apparatus 50 adapted to generate a first airflow 81, from here on referred to a recirculation airflow 81, a second airflow 82, from here on referred to as a ventilation airflow 82 and a third airflow 83, from here on referred to as an exhaust airflow 83.

The recirculation airflow 81 recirculates air from within the enclosed space through a pollutant removal structure 61 in a conduit in between an indoor inlet 55 and a first indoor outlet 53 of the air purification apparatus 50 into the enclosed space 1, thereby lowering the concentration of an indoor unfavourable matter and purifying the indoor air. The recirculation airflow 81 may be generated using a first air displacement apparatus or device 67, such as a fan, ventilator, ionic wind generator, air pump, or the like.

The ventilation airflow 82 introduces air from the outdoor space into the enclosed space 1 through a further pollutant removal structure 63 in a further conduit in between an outdoor inlet 57 and a second indoor outlet 51 of the air purification apparatus 50, thereby lowering the concentration of an outdoor unfavourable matter to be introduced into the enclosed space 1. The further conduit may further house a heat exchanger 70 that adjusts, e.g. heats or cools, the outdoor air prior to its introduction into the enclosed space 1 for the purpose of climate control, as is well-known per se. The ventilation airflow 81 may be generated using a second air displacement apparatus or device 69, such as a fan, ventilator, ionic wind generator, air pump, or the like.

The ventilation airflow 82 maybe used to generate a positive pressure relative to the outdoor space within the enclosed space 1, thereby forcing air from the enclosed space 1, i.e. ventilating the enclosed space 1, e.g. in order to lower the concentration of an unfavourable matter generated within the enclosed space 1, such as for example VOCs in case of a freshly decorated enclosed space 1 or $CO_2$ by people being present within the enclosed space 1.

The exhaust airflow 83 may be used to assist such ventilation, by forcibly expelling indoor air under control of the second air displacement apparatus or device 69 by way of non-limiting example only. A third second air displacement apparatus or device (not shown) may be used for this purpose instead. The exhaust airflow 83 maybe passed through yet a further conduit extending between an indoor inlet such as the second inlet 51 and an outdoor outlet 59. A valve arrangement 65 may be present to switch the operation of the second air displacement apparatus or device 69 between generation of the ventilation airflow 82 and the exhaust airflow 83 as will be readily understood by the skilled person.

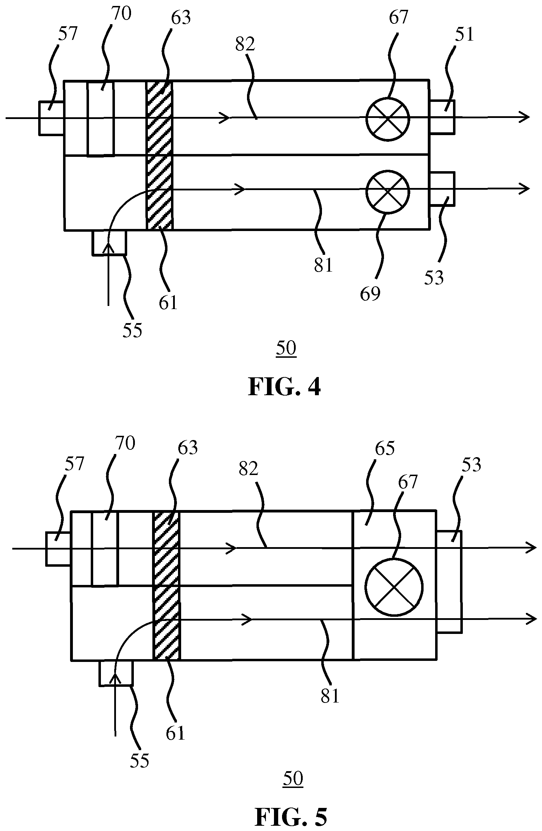

As previously mentioned, the pollutant removal structures 61, 63 within the air purification apparatus 50 maybe configured to remove any suitable unfavourable matter from the indoor or outdoor air such as for example $CO_2$, $O_3$, PM 10, PM 2.5, CO, $NO_2$ $SO_2$, volatile organic compounds such as formaldehyde or toluene, and so on. It should furthermore be understood that in accordance with embodiments of the present invention, the air purification apparatus 50 is arranged to generate at least the recirculation airflow 81 and the ventilation airflow 82, which may be achieved with any suitable configuration of the air purification apparatus 50. For example, FIG. 4 schematically depicts another example embodiment of the air purification apparatus 50, in which the air purification apparatus 50 is configured to generate the recirculation airflow 81 and the ventilation airflow 82 only using independent air displacement apparatuses 67, 69 as previously explained, whereas in FIG. 5 another example embodiment of the air purification apparatus 50 is schematically depicted in which the recirculation airflow 81 and the ventilation airflow 82 are generated using a single air displacement apparatus 67 communicatively coupled to a valve arrangement 65 that allows the air purification apparatus 50 to switch between the recirculation airflow 81 and the ventilation airflow 82 or mixtures thereof. FIG. 5 further schematically depicts that the recirculation airflow 81 and the ventilation airflow 82 share the same indoor outlet 53 of the air purification apparatus 50, and it should be understood that any of the embodiments of the air purification apparatus 50 these airflows may share such an outlet. It should furthermore be understood that many more configuration variations of the air purification apparatus 50 are of course possible without departing from the teachings of the present invention such that the given example configurations of the air purification apparatus 50 should in no way be construed as limiting the scope of the present invention.

Although not specifically shown in these example embodiments, the air purification apparatus 50 may comprise at least part of the air purification monitoring system 10 and/or the sensor device 20. For example, the air purification apparatus 50 may include the air purification monitoring system 10 according to any of the described embodiments communicatively coupled to a separate sensor device 20 according to any of the described embodiments, the air purification apparatus 50 may include both the air purification monitoring system 10 according to any of the described embodiments and the sensor device 20 according to any of the described embodiments.

Alternatively, the air purification apparatus 50 may include a wired or wireless communication module (not shown) adapted to communicate with the air purification monitoring system 10 according to any of the described embodiments, which itself may be communicatively coupled to a separate sensor device 20 according to any of the described embodiments. In this case, the air purification apparatus 50 further comprises a controller arrangement (not shown) of the one or more air displacement apparatuses 67, 69 that controls the one or more air displacement apparatuses 67, 69 in accordance with a control signal generated by the processor 31 as will be explained in further detail below. In the context of the present application, such a control signal may comprise one or more control instructions for the air purification apparatus 50. Such control instructions configure the air purification apparatus 50 to operate in a particular mode and as such may instruct the air purification apparatus 50 to operate any of the air displacement apparatuses 67, 69, the valve arrangement 65 if present and so on in accordance with the configuration information conveyed by the control signal.

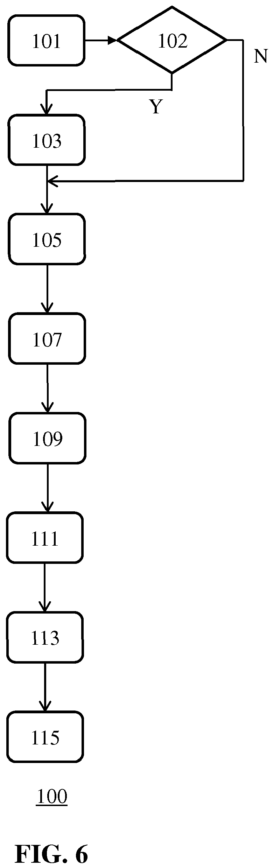

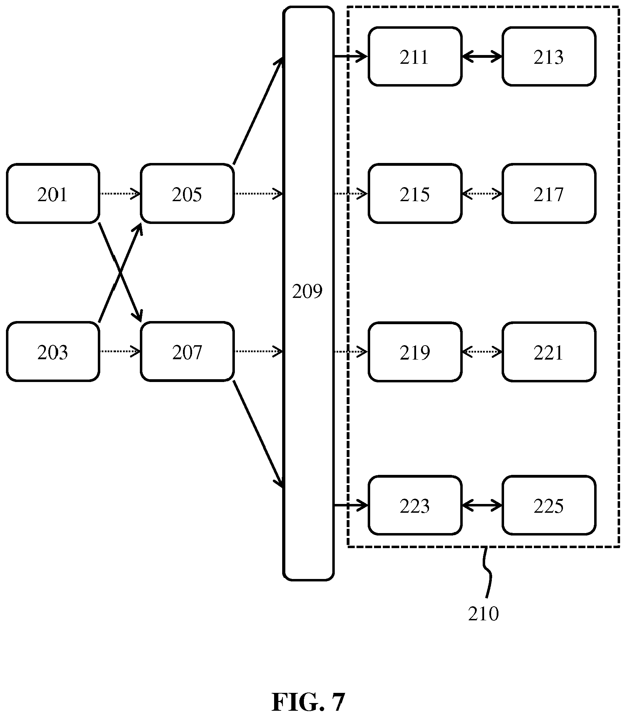

In accordance with embodiments of the present invention, the processor 31 is adapted to implement the method 100, a flow chart of which is depicted in FIG. 6, with a state diagram of the modes of operation 210 of the air purification apparatus 50 to be selected by the processor 31 schematically depicted in FIG. 7. The method 100 starts in operation 101, in which the processor 31 is activated, after which the method optionally proceeds to operation 102 in which it is checked if the air purification monitoring system 10 needs to be calibrated. Such calibration for example may include the determination of the volume of the enclosed space 1 and the spontaneous ventilation between the enclosed space 1 and the outdoor space, as these typically are parameters that impact on the way the air purification apparatus 50 should be operated in order to maintain the air quality within the enclosed space 1 in an effective manner.

If such calibration is required and indeed included within the method 100 (which is not necessarily the case as this is an optional feature), the method 100 proceeds to optional operation 103 in which the calibration is performed. Regarding the determination of the volume of the enclosed space 1, in a straightforward embodiment this volume may be specified by a user using any user interface communicatively coupled to the processor 31. This therefore relies on the user providing an accurate estimate of the volume of the enclosed space 1 to ensure that the air purification apparatus 50 can be operated in an efficient manner.

In an alternative embodiment, the volume of the enclosed space 1 may be estimated based on sensor information provided by the sensor device 20. Specifically, the room volume may be derived from a monitored indoor particle (pollutant) concentration, which obeys equation 1 based on the mass conservation law:

$$\frac{dC}{dt} = k_v P_p C_{out} - (k_0 + k_v)C - \frac{CADR}{V} * C \qquad (1)$$

In the formula:

$C$ Indoor particle concentration, g/m$^3$;
$P_p$ Penetration coefficient of particles from the outside world into the air-filled space housing the air purification apparatus 50, this coefficient typically is around 0.8 in an average domestic dwelling;
$C_{out}$ Outdoor particle concentration, g/m$^3$, which may be obtained as explained in the present application;
$k_0$ Particle natural sedimentation rate, h$^{-1}$, normally around 0.2 h$^{-1}$;
$k_v$ Air changing rate, h$^{-1}$;
$V$ Room volume, m$^3$;
CADR Clean Air Delivery Rate, m$^3$/h.

A typical CADR curve may be recorded by a sensor 21, e.g. may be expressed using a linear scale on the y-axis of a plot depicting the CADR curve. The recorded CADR curve can be expressed by equation (2):

$$C = m * e^{-kt} \qquad (2)$$

$k$ is thus the exponential decay constant in respect of the concentration curve.
By combining equations (1) and (2), the following equation (3) is obtained:

$$\frac{dC}{dt} = -km*e^{-kt} = k_v P_p C_{out} - (k_0 + k_v)C - \frac{CADR}{V}*C \ (3)$$

By substituting $-km*e^{-kt} = -kC$, equation (4) may be obtained as follows:

$$\left(\frac{CADR}{V} - k + k_0 + k_v\right)*C = k_v P_p C_{out}$$

$$\frac{CADR}{V} = \frac{k_v P_p C_{out}}{C} + k - k_0 - k_v$$

$$\frac{CADR}{V_0} = \frac{0.8 k_v C_{out}}{C} + k - k_v - 0.2 \qquad\qquad (4)$$

The initial CADR may be used to calculate the room volume $V_0$, i.e. the volume V of the enclosed space 1 housing the air purification apparatus 50. This room volume for instance may be obtained when the air purification apparatus 50 is operated for the first time in a hermetically enclosed space 1. Other suitable ways of obtaining the room volume may be applied instead.

The processor 31 may be adapted to estimate the natural rate of ventilation Q based on changes in the $CO_2$ concentration or any other suitable gaseous compound, e.g. volatile organic compounds (VOCs), within the enclosed space 1 housing the air purification apparatus 50 when one or more persons are present in the air-filled space and the air purification apparatus 50 is switched off. Specifically, as such persons exhale $CO_2$, the level of $CO_2$ within the air-filled space should increase in accordance with the number of people within the air-filled space and its volume. Deviations from such expected increase, i.e. a smaller increase in $CO_2$ levels over time than expected, can be attributed to ventilation between the air-filled space and the outside world. For example, the processor 31 may be adapted to estimate the rate of ventilation Q in accordance with equation (5):

$$Croom(t) = \left(Croom(t=0) - \frac{C_{outdoor}*Q+S}{Q}\right)*e^{\frac{Q}{-V}\Delta t} + \frac{C_{outdoor}*Q+S}{Q} \qquad\qquad (5)$$

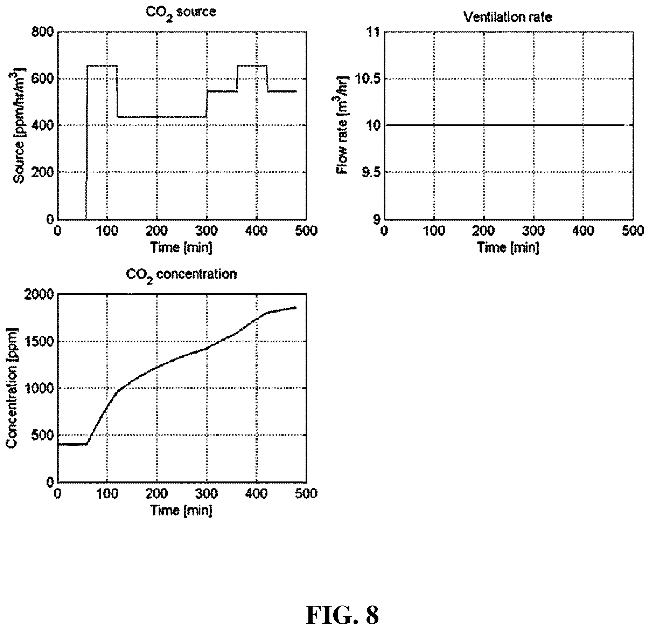

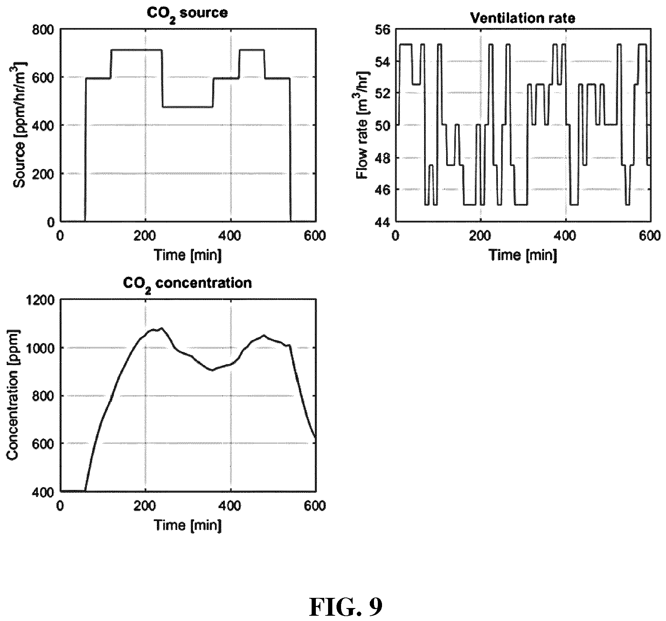

In equation (5), Croom(t) is the $CO_2$ concentration in the air-filled space (in $g/m^3$) at a point in time t, i.e. a period of time $\Delta t$ (in hours) after start of the monitoring period at t=0, $C_{outdoor}$ is the ambient $CO_2$ concentration (in $g/m^3$) in the outside world in ventilation with the air-filled space, and S is the $CO_2$ source strength (in $g/m^3$) within the air-filled space. The $CO_2$ source strength of an individual ($S_i$) typically is within a given range (e.g. within a range of 0.16-0.33 1/min for an adult). The processor 31 may calculate the source strength S based on a determined number N of individuals within the air-filled space, e.g. $S = N*S_i$. The number N of individuals within the air-filled space maybe determined in any suitable manner, e.g. the number N may be specified by a user through a user interface of the air purification monitoring system 10 or alternatively the air purification monitoring system 10 may comprise one or more sensors (not shown), e.g. motion detection sensors or the like, for detecting the presence of individuals within the air-filled space. FIG. 8 and FIG. 9 each depict a plurality of graphs including a graph depicting the $CO_2$ source strength S (top left), natural ventilation rate Q (top right) and $CO_2$ concentration Croom (t) (bottom left) as a function of time. In FIG. 8 the enclosed space 1 exhibits a low rate of ventilation whereas in FIG. 9 the enclosed space 1 exhibits a high rate of ventilation, as evidenced by the high degree of fluctuations in the natural ventilation rate Q due to changes in ambient conditions such as wind conditions. This leads to noticeable differences in the build-up of $CO_2$ within the enclosed space 1, which may be used to estimate the rate of spontaneous (natural) ventilation between the enclosed space 1 and the outdoor space.

The processor 31 may determine the natural rate of ventilation Q between the enclosed space 1 housing the air purification apparatus 50 and the outside world based on a series of sensor signals received from a $CO_2$ sensor 23, as the trend in the $CO_2$ concentration in the air-filled space can be used to determine the spontaneous rate of ventilation Q, i.e. the rate of ventilation when the air purification apparatus 50 is switched off, as has been explained in more detail above with the aid of equation (5). It should be understood that equation (5) is provided by way of non-limiting example only and that other equations from which the rate of ventilation Q can be derived based on such trends in $CO_2$ may also

be used. The processor 31 may obtain the ambient $CO_2$ concentration for determining the rate of ventilation Q in any suitable manner, e.g. from a further $CO_2$ sensor placed in the outside world or from a service over a network such as the Internet providing (real-time) information about $CO_2$ concentrations in regions of interest including the region in which the air-filled space is located. The processor 31 may obtain the ambient $CO_2$ concentration at any suitable point in time.

Alternatively, the natural ventilation rate Q may be determined by monitoring other gaseous compounds generated by persons within the air-filled space, e.g. volatile organic compounds. It should furthermore be understood that the source strength S is not necessarily limited to the generation of $CO_2$ by people within the enclosed space 1. It is for instance equally feasible that the source strength S represents a rate of release of another unfavourable matter, such as a volatile organic compound being released within a freshly decorated enclosed space 1. Alternatively, the spontaneous rate of ventilation of the enclosed room 1 may be estimated in any other suitable manner, such as a user-specified estimate provided through a user interface in communication with the processor 31.

Further refinements to the estimation of the room volume and the rate of spontaneous ventilation are of course possible. For example, the processor 31 may receive a series of sensor readings from the further sensor 23 such as a $CO_2$ sensor or VOC sensor, e.g. in order to monitor changes in the $CO_2$ levels within the enclosed space 1, as such changes may be indicative of changes in the volume of the enclosed space, e.g. by a door or the like between the enclosed space 1 and an adjacent space being opened or closed or a change in ventilation conditions between the air-filled space and the outside world. A change in the volume or ventilation conditions of the air-filled space can be detected by a sudden change in the unfavourable matter levels and/or $CO_2$ levels (or levels of other pollutants monitored to determine the occupancy rate of the enclosed space 1 as previously explained). For example, where the processor 31 detects a sudden change in unfavourable matter concentration and $CO_2$ concentration, this may be indicative of a change in the volume of the enclosed space 1 or a change in the ventilation conditions of the enclosed space 1.

The processor 31 may distinguish between a change in volume and a change in ventilation conditions in the following manner. In case of a change in volume of the enclosed space 1 after the initial sudden change in monitored pollutant and $CO_2$ levels, these levels will gradually decrease until an equilibrium is reached between the two connected spaces. In such a scenario, the $CO_2$ levels typically remain higher than the typical ambient $CO_2$ levels of about 400 ppm. In case of a change in ventilation conditions, the $CO_2$ level in the air-filled space will rapidly equilibrate with ambient $CO_2$ levels, i.e. reach levels of about 400 ppm. Upon calibration, the method 100 proceeds to operation 105 in which the processor 31 receives a sensor reading from the first unfavourable matter sensor 21 indicative of a concentration of the first unfavourable matter within the enclosed space 1, whilst in operation 107 the processor 31 receives information indicative of the concentration of an outdoor unfavourable matter, for example from an outdoor unfavourable matter sensor or from an Internet service providing real-time information of the concentration of the outdoor unfavourable matter in the area in which the enclosed space 1 is located. It is noted for the avoidance of doubt that operations 105, 107 may be performed in any suitable order or concurrently, and at any suitable point in time, e.g. prior to, during or after the calibration of the air purification monitoring system 10. It is noted for the avoidance of doubt that the indoor unfavourable matter and the outdoor unfavourable matter may be different types of matter, e.g. $CO_2$ and particulate matter respectively by way of non-limiting example although alternatively it can be envisaged that the indoor unfavourable matter and the outdoor unfavourable matter are the same matter.

Next in operation 109, the processor 31 determines the operating mode of the air purification apparatus 50 based on received indications of the respective concentrations of the indoor and outdoor unfavourable matter. This may involve the processor 31 comparing each of these concentrations against an appropriate threshold defining an upper limit at which the concentration of that unfavourable matter is considered acceptable in terms of health risk. This may lead to the following scenarios as shown in Table 1:

Table 1

| Scenario | Indoor unfavourable matter | Outdoor unfavourable matter |
|---|---|---|
| 1 | Low | Low |
| 2 | High | Low |
| 3 | Low | High |
| 4 | High | High |

In Table 1, the term 'LOW' indicates that the unfavourable matter has a concentration below its defined threshold, whereas the term 'HIGH' indicates that the unfavourable matter has a concentration above its defined threshold In scenario 1, both indoor and outdoor unfavourable matter concentrations are at safe levels, such that no ventilation or purification of the enclosed space 1 is required and the air purification apparatus 50 may be disabled by the processor 31 or alternatively operated at a low ventilation and/or low recirculation rate in order to maintain a degree of ventilation and/or air purification within the enclosed space 1. For example, the processor 31 may cause the air purification apparatus 50 to generate a total airflow rate as defined by the combination of the rate of the recirculation airflow 81 and the rate of the ventilation airflow 82, e.g. a mixture of a recirculation airflow 81 and ventilation airflow 82 (and exhaust air flow 83 if present).

In an embodiment, the processor 31 determines the total airflow rate to be produced with the air purification apparatus 50 based on the estimated volume Vroom of the enclosed space 1. For example, the total airflow rate may be based on a requirement to replace the total volume of the enclosed space 1 within a given time period, such as 30 minutes, 1 hour and so on. So, by way of non-limiting example, for an enclosed space having a volume of $30m^3$ and a requirement to replenish the total volume of the enclosed space every 20 minutes, the required total airflow rate is 90 $m^3$/h.

In scenario 2, the indoor unfavourable matter concentration exceeds its safe threshold, which may trigger the processor 31 to increase the rate of the ventilation airflow 82 whilst reducing the rate of the recirculation airflow 81, such that the contaminated indoor air is forced from the enclosed space 1 by increased ventilation with the outside space due to the positive pressure in the enclosed space 1 generated with the ventilation airflow 82 and/or by the exhaust airflow 83 if such an airflow can be generated with the air purification apparatus 50. In an example embodiment, the total airflow rate may be kept constant by the processor 31 whilst the rate of the recirculation airflow 81 is reduced or terminated and the rate of the ventilation airflow 82 is increased. Alternatively, in such a scenario the total airflow rate may be increased to increase the rate of removal of the indoor unfavourable matter, e.g. by increasing the rate of the ventilation airflow 82 whilst maintaining, reducing or terminating the recirculation airflow 81.

In scenario 3, the outdoor unfavourable matter concentration exceeds its safe threshold, which may trigger the processor 31 to reduce or terminate the ventilation airflow 82 in order to prevent the build-up of dangerously high concentrations of outdoor unfavourable matter within the enclosed space 1 or at least to prevent the pollutant removal structure 63 from being heavily loaded with the high levels of the of outdoor unfavourable matter.

In scenario 4, both the indoor and outdoor unfavourable matter concentration exceed their respective safe thresholds. In this scenario, the processor 31 triggers the air purification apparatus 50 to increase the rate of the recirculation airflow 81 whilst reducing the rate of the ventilation airflow 82 such that the indoor air within the enclosed space 1 is purified at a higher rate whilst the entrance of polluted outdoor air into the enclosed space is reduced or avoided in case the processor 31 triggers the air purification apparatus 50 to terminate the ventilation airflow 82.

Of course, further refinements of the above scenarios may be contemplated. For example, the processor 31 may be adapted to generate a control signal that individually sets the first airflow rate and the second airflow rate to one of a low airflow rate, a medium airflow rate and a high airflow rate, such that the control signal sets the first airflow rate to one of the medium airflow rate and high airflow rate and the second airflow rate to one of the low airflow rate and the medium airflow rate, with the first airflow rate being higher than the second airflow rate if the spontaneous ventilation is below a defined threshold, sets the first airflow rate to the low airflow rate and the second airflow rate to one of the medium airflow rate and the high airflow rate if the spontaneous ventilation is above the defined threshold and the second unfavourable matter concentration is below a further defined threshold; and sets the first airflow rate to one of the medium airflow rate and high airflow rate and the second airflow rate to the low airflow rate if the spontaneous ventilation is above the defined threshold and the second unfavourable matter concentration is above the further defined threshold in order to achieve effective ventilation and purification of the enclosed space. Other variations will be immediately apparent to the skilled person.

In a preferred embodiment, such scenarios are combined with the knowledge about the volume of the enclosed space 1 and the rate of spontaneous ventilation of the enclosed space 1 as will be explained in further detail with the aid of FIG. 6. In order for the processor 31 to determine which of the operation modes within the spectrum 210 of operation modes is to be selected, the processor 31 first determines whether the rate of spontaneous ventilation of the enclosed space 1 is above a defined threshold, in which case the processor 31 starts from state 201 or alternatively starts from state 203 if the rate of spontaneous ventilation of the enclosed space 1 is below the defined threshold. The defined threshold typically specifies a rate at which the air volume of the enclosed space 1 is completely replaced by such spontaneous ventilation.

The rate of spontaneous ventilation relative to the defined threshold may determine the total airflow rate to be deployed by the air purification apparatus 50. For example, starting from state 201, the air purification apparatus 50 may be operated at a low total airflow rate as the spontaneous ventilation contributes to the airflow between the enclosed space 1 and the outdoor space. On the other hand, starting from state 203, the air purification apparatus 50 maybe operated at the height total airflow rate as the contribution of the spontaneous ventilation is small and may be disregarded. As previously mentioned, the total airflow rate preferably is based on the volume of the enclosed space 1, such as on the volume of the enclosed space 1 and a refresh rate of this volume. For example, where this refresh rate specifies that the total volume of the enclosed space 1 has to be refreshed at least five times an hour, the total airflow rate ($m^3$ per hour) typically is five times the total volume of the enclosed space 1.

Next, the processor 31 determines whether state 205 or state 207 applies. State 205 represents a situation in which the outdoor unfavourable matter concentration is more critical (harmful) than the indoor unfavourable matter concentration, whereas state 207 represents a situation in which the indoor unfavourable matter concentration is more critical (harmful) than the outdoor unfavourable matter concentration. Based on the determined rate of spontaneous ventilation and the respective concentrations of the indoor and outdoor unfavourable matter, the processor 31 next sets in 209 the respective rates of the recirculation airflow 81, ventilation airflow 82 and exhaust airflow 83 if present.

For example, if states 203 (low spontaneous ventilation) and 205 (high outdoor unfavourable matter concentration) apply, the processor may select sub-mode 211 in which a low ventilation airflow rate and a high recirculation (air purification) rate are chosen for the air purification apparatus 50, which sub-mode 211 may be reversibly switched to sub-mode 213 in which only the recirculation airflow 81 is used in order to prevent outdoor unfavourable matter from entering the enclosed space 1, e.g. when the concentration of the outdoor unfavourable matter exceeds its safe threshold.

When states 201 (high spontaneous ventilation) and 205 (high outdoor unfavourable matter concentration) apply, the processor may select sub-mode 215 in which a low ventilation airflow rate and a high recirculation (air purification) rate are chosen for the air purification apparatus 50, which sub-mode 215 may be reversibly switched to sub-mode 217 in which only the recirculation airflow 81 is used in order to prevent outdoor unfavourable matter from entering the enclosed space 1, e.g. when the concentration of the outdoor unfavourable matter exceeds its safe threshold. The difference between sub-modes 211, 213 on the one hand and 215, 217 on the other hand is that the total air flow rate produced by the air purification apparatus 50 is typically higher in sub-modes 211, 213 compared to sub-modes 215, 217 due to the lower rate of spontaneous ventilation of the enclosed space 1.

As another example, if states 203 (low spontaneous ventilation) and 207 (high indoor unfavourable matter concentration) apply, the processor may select sub-mode 219 in which a high ventilation airflow rate and a low recirculation (air purification) rate are chosen for the air purification apparatus 50, which sub-mode 219 may be reversibly switched to sub-mode 221 in which only the ventilation airflow 82 is used in order to prevent outdoor unfavourable matter from entering the enclosed space 1, e.g. when the concentration of the outdoor unfavourable matter exceeds its safe threshold.

When states 201 (high spontaneous ventilation) and 207 (high indoor unfavourable matter concentration) apply, the processor may select sub-mode 223 in which a high ventilation airflow rate and a low recirculation (air purification) rate are chosen for the air purification apparatus 50, which sub-mode 223 may be reversibly switched to sub-mode 225 in which only the ventilation airflow 82 is used in order to prevent outdoor unfavourable matter from entering the enclosed space 1, e.g. when the concentration of the outdoor unfavourable matter exceeds its safe threshold. The difference between sub-modes 219, 221 on the one hand and 223, 225 on the other hand is that the total air flow rate produced by the air purification apparatus 50 is typically higher in sub-modes 219, 221 compared to sub-modes 223, 225 due to the lower rate of spontaneous ventilation of the enclosed space 1.

As a further refinement, the processor 31 may be adapted to disable the air purification apparatus 50 if the air quality within the enclosed space 1 meets a defined standard, such as a national air quality standard of a nation in which the enclosed space 1 is located.

The state diagram in FIG. 6 may be amended in an alternative embodiment by replacing the comparison of the outdoor and indoor unfavourable matter as represented by states 205 and 207 with a comparison of the source strength S of a source of an indoor unfavourable matter as previously explained against a defined threshold. For example, state 205 may represent a scenario in which the source strength S is below this defined threshold, in which case the processor 31 triggers the air purification apparatus 50 to operate in a mode dominated by the recirculation airflow 81, i.e. sub-modes 211, 213, 215 or 217. On the other hand, state 207 may represent a scenario in which the source strength S exceeds this defined threshold, in which case the processor 31 triggers the air purification apparatus 50 to operate in a mode dominated by the ventilation airflow 82, i.e. sub-modes 219, 221, 223 or 225.

In yet a further refinement, the processor 31 may estimate the fraction of outdoor air within the enclosed space 1 based on the estimated spontaneous ventilation rate of the enclosed space 1 and the ventilation rate 82 into the enclosed space 1. The processor may derive an estimated concentration estimate a concentration of the outdoor unfavourable matter within the enclosed space 1 based on the obtained outdoor concentration of this unfavourable matter as previously explained and the fraction of outdoor air within the enclosed space 1. This is particularly relevant where no sensor for determining the indoor concentration of the outdoor unfavourable matter is present within the enclosed space 1. For example, where an outdoor concentration of the unfavourable matter is 200 ppm and the fraction of the outdoor air within the enclosed space is estimated to be 0.5 (50%), the processor 31 may estimate the indoor concentration of the outdoor unfavourable matter to be about 100 ppm. In this case, the processor 31 may determine the operating mode of the air purification apparatus 50 as explained above based on the estimated indoor concentration of the outdoor unfavourable matter rather than its outdoor concentration, e.g. by comparing the estimated indoor concentration of the outdoor unfavourable matter against its defined threshold as previously explained.

This estimate of the indoor concentration of the outdoor unfavourable matter may be further refined by factoring in the efficiency of the pollutant removal structure 63 through which the ventilation airflow 82 is guided prior to entering the enclosed space 1. For example, where the removal efficiency of the pollutant removal structure 63 is about 0.8 (80% of the outdoor unfavourable matter is removed by the pollutant removal structure 63), outdoor concentration of the unfavourable matter is 200 ppm and the fraction of the outdoor air within the enclosed space is estimated to be 0.5 (50%), the processor 31 may estimate the indoor concentration of the outdoor unfavourable matter to be about 20 ppm.

As yet a further refinement, the actual efficiency of the pollutant removal structure 63 may be a function of its expected end of life. Many algorithms for estimating the end of life of a pollutant removal structure are readily available to skilled person and it should be understood that any of such available algorithms may be used for this purpose.

Upon determination of the desired mode of operation of the air purification apparatus 50 in operation 209 of method 100, the method proceeds to operation 211 in which the processor 31 generates the control signal that configures the air purification apparatus 50 to operate in accordance with the mode selected by the processor 31, after which the processor 31 in operation 213 sends the generated control signal to the air purification apparatus 50 or to the one or more air displacement apparatuses 65, 67, 69 within the air purification apparatus 50 in case the processor 31 forms part of the air purification apparatus 50 as previously explained before the method 100 terminates in operation 115. Alternatively, it may be checked after operation 113 if the method 100 is to continue, if, when this is the case, the method 100 may revert back to operation 103 or 105 and proceed accordingly until the method 100 is to be terminated, e.g. when the air purification apparatus 50 is switched off.

The above described embodiments of the method 100 executed by the processor 31 may be realized by computer readable program instructions embodied on a computer readable storage medium having, when executed on the processor 31, cause the processor arrangement 31 to implement the method 100. Any suitable computer readable storage medium may be used for this purpose, such as for example an optically readable medium such as a CD, DVD or Blu-Ray disc, a magnetically readable medium such as a hard disk, an electronic data storage device such as a memory stick or the like, and so on. The computer readable storage medium may be a medium that is accessible over a network such as the Internet, such that the computer readable program instructions may be accessed over the network. For example, the computer readable storage medium may be a network-attached storage device, a storage area network, cloud storage or the like. The computer readable storage medium may be an Internet-accessible service from which the computer readable program instructions may be obtained. In an embodiment, the processor 31 is adapted to retrieve the computer readable program instructions from such a computer readable storage medium and to create a new computer readable storage medium by storing the retrieved computer readable program instructions in the data storage device 33.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. An air purification monitoring system (10) for monitoring an air purification apparatus (50) adapted to purify air in an enclosed space (1), the air purification apparatus (50) comprising:

   a first inlet (55) for receiving indoor air from the enclosed space (1), a second inlet (57) for receiving outdoor air from an outdoor space and at least one outlet (53) coupled to the first and second inlets (55, 57);
   a filter arrangement (61, 63) positioned in between the first and second inlets (55, 57) and the at least one outlet (53); and
   an airflow displacement arrangement (65, 67, 69) arranged to generate at least a first airflow (81) from the first inlet (55) to the at least one outlet (53) and a second airflow (82) from the second inlet (57) to the at least one outlet (53);
   the air purification monitoring system (10) comprising a processor (31) arranged to generate a control signal for the airflow displacement arrangement (65, 67, 69) as a function of a first unfavourable matter concentration within the enclosed space (1) and a second unfavourable matter concentration in the outdoor air, said control signal causing the airflow displacement arrangement (65, 67, 69) to generate at least the first airflow (81) at a first airflow rate and the second airflow (82) at a second airflow rate.

2. The air purification monitoring system (10) of claim 1, further comprising a first unfavourable matter sensor (21) communicatively coupled to the processor (31) for sensing the first unfavourable matter concentration, and/or a second unfavourable matter sensor (23) communicatively coupled to the processor (31) for sensing the second unfavourable matter concentration, or wherein the processor (31) is further arranged to retrieve the second unfavourable matter concentration from a remote service.

3. The air purification monitoring system (10) of claim 1, wherein the processor (31) is further configured to generate the control signal in order to cause the airflow displacement arrangement (65, 67, 69) to generate at least the first airflow rate and the second airflow rate based on a volume of the enclosed space (1) and/or as a function of a rate of spontaneous ventilation between the enclosed space (1) and the outdoor space.

4. The air purification monitoring system (10) of claim 1, wherein the air purification apparatus (50) further comprises a third inlet (51) for receiving the indoor air from the enclosed space (1) and a third outlet (59) for discharging the indoor air to the outdoor space;
the airflow displacement arrangement (65, 67, 69) is further arranged to generate a third airflow (83) from the third inlet (51) to the third outlet (59);
said control signal further causes the airflow displacement arrangement (65, 67, 69) to generate the third airflow (83) at a third airflow rate.

5. The air purification monitoring system (10) of claim 1, wherein the first unfavourable matter is $CO_2$, $O_3$, PM 10, PM 2.5, CO, $NO_2$ or $SO_2$, and wherein said spontaneous ventilation is estimated from a change in the first unfavourable matter concentration in the enclosed space (1) over time.

6. The air purification monitoring system (10) of claim 3, wherein the processor (31) is further configured to generate the control signal in order to cause the airflow displacement arrangement (65, 67, 69) to individually set the first airflow rate and the second airflow rate to one of a low airflow rate, a medium airflow rate and a high airflow rate, and wherein the control signal is configured to:

   set the first airflow rate to one of the medium airflow rate and the high airflow rate and the second airflow rate to one of the low airflow rate and the medium airflow rate, with the first airflow rate being higher than the second airflow rate if the spontaneous ventilation is below a defined threshold;
   set the first airflow rate to the low airflow rate and the second airflow rate to one of the medium airflow rate and the high airflow rate if the spontaneous ventilation is above the defined threshold and the second unfavourable matter concentration is below a further defined threshold; and
   set the first airflow rate to one of the medium airflow rate and the high airflow rate and the second airflow rate to the low airflow rate if the spontaneous ventilation is above the defined threshold and the second unfavourable matter concentration is above the further defined threshold.

7. The air purification monitoring system (10) of claim 6, wherein the processor (31) is configured to generate the control signal at least defining the first airflow rate and the second airflow rate based on a comparative result between the first unfavourable matter concentration and the second unfavourable matter concentration or the comparative result between the first unfavourable matter concentration and another defined threshold in order to further determine the specific levels of the first and second airflow rates respectively.

8. An air purification apparatus (50) adapted to purify air in an enclosed space (1), comprising:

   a first inlet (55) for receiving indoor air from the enclosed space (1), a second inlet (57) for receiving outdoor air from an outdoor space and at least one outlet (53) coupled to the first and second inlets (55, 57);
   a filter arrangement (61, 63) positioned in between the first and second inlets (55, 57) and the at least one outlet (53); and
   an airflow displacement arrangement (65, 67, 69) arranged to generate a first airflow (81) from the first inlet (55) to the at least one outlet (53) and a second airflow (82) from the second inlet (57) to the at least one outlet (53), wherein the airflow displacement arrangement (65, 67, 69) is responsive to the control signal generated with the air purification monitoring system (10) of claim 1.

9. The air purification apparatus (50) of claim 8, further comprising the air purification monitoring system (10) of any of claims 1-7.

10. The air purification apparatus (50) of claim 8, wherein the airflow displacement arrangement (65, 67, 69) comprises a first airflow displacement apparatus (67) and a second airflow displacement apparatus (65); the first airflow displacement apparatus (67) is arranged to generate the first airflow (81), and at least the second airflow displacement apparatus (65) is arranged to generate the second airflow (82).

11. The air purification apparatus (50) of claim 10, wherein the second airflow displacement apparatus (65) comprises at least one adjustable valve for regulating the first airflow rate and the second airflow rate.

12. The air purification apparatus (50) of claim 11, wherein the airflow displacement arrangement (65, 67, 69) further comprises a third airflow displacement apparatus (69); the second airflow displacement apparatus (65) and the third airflow displacement apparatus (69) are arranged to generate the third airflow (83); the at least one adjustable valve is further arranged to regulate the third airflow rate.

13. A computer implemented method (100) for generating a control signal for controlling the air purification apparatus (50) of any of claims 8 to 12, the method (100) comprising:

determining (105) a first unfavourable matter concentration within the enclosed space (1);
determining (107) a second unfavourable matter concentration in the outdoor air;
determining (109) a first airflow rate from the first inlet (55) to the at least one outlet (53) and a second airflow rate from the second inlet (57) to the at least one outlet (53) based on the determined first unfavourable matter concentration and the determined second unfavourable matter concentration;
generating (111) the control signal indicative of at least the determined first and second airflow rates; and
communicating (113) the control signal to the airflow displacement arrangement (65, 67, 69) of the air purification apparatus (50).

14. The computer-implemented method (100) of claim 13, further comprising:

determining (103) at least one of a volume of the enclosed space (1) and a spontaneous ventilation rate between the enclosed space (1) and the outdoor air; and
determining (109) a first airflow rate from the first inlet (55) to the at least one outlet (53) and a second airflow rate from the second inlet (57) to the at least one outlet (53) based on the determined first unfavourable matter concentration, the determined second unfavourable matter concentration and the determined volume of the enclosed space (1) and/or the determined spontaneous ventilation rate between the enclosed space (1) and the outdoor air.

15. A computer program product comprising a computer readable storage medium having computer readable program instructions embodied therewith for, when executed on the processor (31) of the air purification monitoring system (10) of any of claims 1 to 7, causing the processor (31) to implement the method (100) of claim 13 or 14.

**FIG. 1**

**FIG. 2**



50

**FIG. 3**

FIG. 4

FIG. 5

FIG. 6

**FIG. 7**

**FIG. 8**

**FIG. 9**

Europäisches Patentamt

European Patent Office

Office européen des brevets

# EUROPEAN SEARCH REPORT

**Application Number**

EP 18 17 1214

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/032264 A1 (EMMONS DAVID J [US] ET AL) 29 January 2015 (2015-01-29) <br> * paragraphs [0004], [0005] * <br> * paragraph [0016] - paragraph [0022] * <br> * paragraph [0028] * <br> * paragraph [0032] - paragraph [0033] * <br> * paragraph [0043] * <br> * figures 1-3 * | 1-15 | INV. <br> F24F3/16 <br> F24F11/00 <br> F24F11/63 <br> F24F11/72 <br> F24F12/00 |
| X | EP 1 752 715 A1 (SAMSUNG ELECTRONICS CO LTD [KR]) 14 February 2007 (2007-02-14) <br><br> * paragraph [0007] - paragraph [0012] * <br> * paragraph [0015] - paragraph [0032]; figure 1 * | 1,2,5, 8-11,13, 15 | |
| X | CN 107 850 325 A (COWAY CO LTD) 27 March 2018 (2018-03-27) <br> * the whole document * | 1 | |
| A | US 2017/167743 A1 (DEMPSEY DANIEL J [US] ET AL) 15 June 2017 (2017-06-15) <br> * the whole document * | 1,8,9 | **TECHNICAL FIELDS SEARCHED (IPC)** <br><br> F24F |

The present search report has been drawn up for all claims

| Place of search | Date of completion of the search | Examiner |
|---|---|---|
| Munich | 19 November 2018 | Arndt, Markus |

EPO FORM 1503 03.82 (P04C01)

## ANNEX TO THE EUROPEAN SEARCH REPORT
## ON EUROPEAN PATENT APPLICATION NO.

EP 18 17 1214

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2018

| Patent document cited in search report | | Publication date | Patent family member(s) | | Publication date |
|---|---|---|---|---|---|
| US 2015032264 | A1 | 29-01-2015 | US 2015032264 A1 | | 29-01-2015 |
| | | | US 2017176030 A1 | | 22-06-2017 |
| EP 1752715 | A1 | 14-02-2007 | CN 1912482 A | | 14-02-2007 |
| | | | EP 1752715 A1 | | 14-02-2007 |
| | | | KR 20070019355 A | | 15-02-2007 |
| CN 107850325 | A | 27-03-2018 | CN 107850325 A | | 27-03-2018 |
| | | | EP 3330624 A1 | | 06-06-2018 |
| | | | KR 20170015096 A | | 08-02-2017 |
| | | | US 2018224134 A1 | | 09-08-2018 |
| US 2017167743 | A1 | 15-06-2017 | NONE | | |

EPO FORM P0459

For more details about this annex : see Official Journal of the European Patent Office, No. 12/82

**EP 3 567 322 A1**

## REFERENCES CITED IN THE DESCRIPTION

### Patent documents cited in the description

- CN 106440029